# EUROPEAN PATENT SPECIFICATION

(11) **EP 3 279 032 B1**
(45) Date of publication and mention of the grant of the patent: **01.07.2020**
(21) Application number: 17184198.4
(22) Date of filing: 01.08.2017
(51) Int. Cl.: B60N 2/64, B60N 2/66, B60N 2/70, B60N 2/68

(54) **VEHICLE SEAT WITH ERGONOMIC SEAT-BACK**
FAHRZEUGSITZ MIT ERGONOMISCHER RÜCKLEHNE
SIÈGE DE VÉHICULE AVEC DOSSIER ERGONOMIQUE

(30) Priority: 01.08.2016 JP 2016151322
(43) Date of publication of application: 07.02.2018
(73) Proprietor: TOYOTA JIDOSHA KABUSHIKI KAISHA, Toyota-shi, Aichi 471-8571 (JP)
(72) Inventor: KATOH, Kohshi, TOYOTA-SHI, AICHI, 471-8571 (JP)
(74) Representative: Cabinet Beau de Loménie

(56) References cited:
- GB-A- 1 360 375
- US-A1- 2015 239 381

## Description

### CROSS REFERENCE TO RELATED APPLICATIONS

The present application claims the benefit of priority to Japanese Patent Application No. 2016-151322 filed on August 1, 2016 with the Japanese Patent Office, the entire contents of which are incorporated herein by reference in its entirety.

### BACKGROUND

### Field of the Disclosure

Embodiments of the present application relate to a vehicle seat.

### Discussion of the Related Art

A vehicle seat taught by US 2015/0239381 A1 comprises a net attached to a seat backrest frame, a ring-shaped connection member having a plurality of string holes that is located higher than a vertical center of the seat backrest frame, and string members arranged radially between the seatback frame and the connection member to form a net serving as a backrest. Rigidity of the string portion is high in the axial direction but low in the bending direction so that the occupant sitting on the vehicle seat is allowed to twist his/her upper body easily around the connection member.

In the vehicle seat taught by US 2015/0239381 A1, the net formed within the seatback frame flexibly holds a back of an occupant. However, when the occupant leans against the net, a connection member as a hub ring and strings connected thereto may be subjected to an excessive load and consequently the strings may be detached from the connection member. In order to enhance connection between the strings and the connection member, a large hook is required to be attached to one end of the string.

Specifically, the vehicle seat taught by US 2015/0239381 A1 is configured to allow the occupant to flexibly sway his/her upper body around the connection member situated behind the occupant's back between shoulder blades. However, since the connection member serves as a rotational center, a portion of the net in the vicinity of the connection member cannot be deformed easily with a motion of the occupant's back. That is, the net used in the vehicle seat taught by US 2015/0239381 A1 may be modified to adjust flexibility or property of the net partially and easily.

Another seat structure is described in GB1360375.

### SUMMARY

Aspects of the present application have been conceived noting the foregoing technical problems, and it is therefore an object of the present application is to provide a vehicle seat having enhanced rigidity in which a property of a net member serving as a backrest can be adjusted easily.

The present application relates to the art of a vehicle seat, as defined in claim 1, comprising: a seatback frame; a hub member situated at a predetermined level of width center of the seatback frame; and a plurality of strings drawn radially between the hub member and the seatback frame to form a seatback supporting an upper body of an occupant sitting on the vehicle seat. In order to achieve the above-explained objective, according to the embodiments of the present disclosure, the strings include an annular string; the hub member includes a plurality of installation members; and the annular string includes a first portion wrapped around or threaded through the installation member, a second portion attached to the seatback frame, and a pair of straight portions extending between the first portion and the second portion.

In a non-limiting embodiment, the seatback frame may comprise a pair of side portions extending vertically, and a pair of protrusions individually attached to the side portions in such a manner as to protrude backwardly. In addition, the vehicle seat may further comprise another string member drawn between the hub member and the seatback frame to establish a resistance counteracting a load applied to the hub member.

In a non-limiting embodiment, the seatback frame may comprise a pair of side portions extending vertically, and a pair of protrusions individually attached to the side portions in such a manner as to protrude backwardly. In addition, the annular strings include the annular strings drawn laterally between the hub member and the seatback frame to establish a resistance counteracting a load applied to the hub member.

In a non-limiting embodiment, one end of the tension string may be attached to a rear end of the protrusion, an intermediate portion of the tension string may be attached to the hub member, and the other end of the tension string may be attached to the rear end of the protrusion.

Thus, according to the embodiments of the present disclosure, the hub member is connected to the seatback frame through the annular strings. Specifically, the first portion of the annular string is wrapped around the installation member without being fixed thereto, the second portion of the annular string is attached to the seatback frame, and the pair of straight portions is drawn between the first portion and the second portion. According to the embodiments of the present disclosure, therefore, detachment of the strings from the hub member can be prevented even if the strings are subjected to a significant load from an upper body of the occupant or resultant stress to expand the strings. In addition, since the string is merely wrapped or wound around the installation member without being fixed thereto, the strings may be drawn between the frame and the hub member easily. Further, property of the vehicle seat such as hardness and stiffness of the seatback may be adjusted either partially or entirely by changing material of the string members at a desired site.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
Fig. 1 is a perspective view showing the vehicle seat according to at least one embodiment of the present disclosure;
Fig. 2 is a side view of the seatback of the vehicle shown in Fig. 1;
Fig. 3 is a schematic illustration showing the hub member and the seatback frame according to the first embodiment;
Fig. 4 is a cross-sectional view showing a cross-section of the hub member according to the first embodiment;
Fig. 5 is a schematic illustration showing a load applied to the hub member according to the first embodiment; and
Fig. 6 is a schematic illustration showing the hub member according to the second embodiment.

**DETAILED DESCRIPTION OF THE PREFERRED EMBODIMENT(S)**

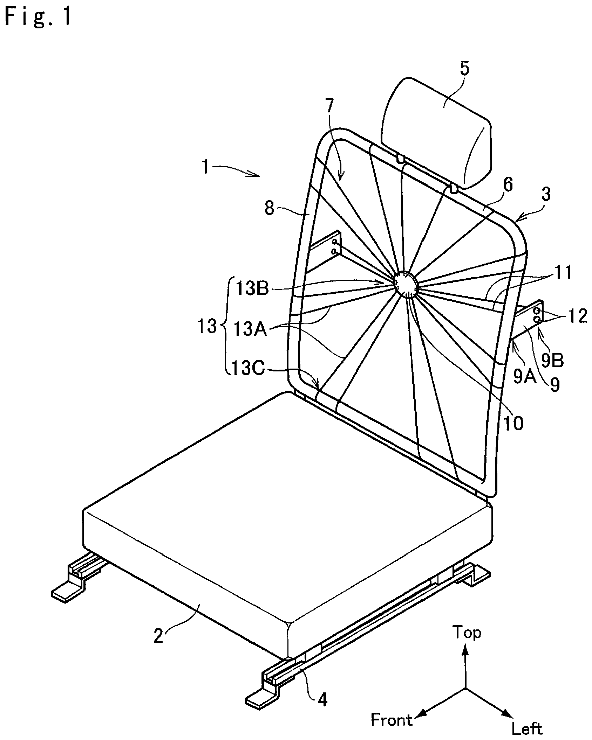

Preferred embodiments of the present disclosure will now be explained with reference to the accompanying drawings. Turning now to Fig. 1, there is shown a vehicle seat 1 according to the first embodiment of the present disclosure. The vehicle seat 1 is contoured to hold one person, and is used in some embodiments not only as a driver's seat but also as a passenger's seat, e.g., a front passenger seat. The vehicle seat 1 comprises a seat base 2 on which an occupant sits, and a seatback 3 for supporting the occupant's back. The vehicle seat 1 is mounted on a pair of rails 4 so that a longitudinal position of the vehicle seat 1 is adjustable in a vehicle, and the seatback 3 is reclinable to adjust an inclination. A headrest 5 is attached to an upper portion of the seatback 3 to support a head of the occupant.

The seatback 3 is contoured in such a manner as to hold especially an upper body of the occupant tightly while allowing the occupant to move flexibly when, e.g., subjected to lateral acceleration during turning. Specifically, the seatback 3 comprises a rectangular seatback frame (as will be simply called the "frame" hereinafter) 6 erected from a rear end portion of the seat base 2 while being inclined, and a net member 7 as a backrest attached to the frame 6.

The frame 6 comprises a pair of side portions 8 extending vertically, an upper lateral portion extending laterally between upper ends of the side portions 8, and a lower lateral portion extending laterally between lower ends of the side portions 8. A plate-like bracket 9 individually attached to each of the side portions 8 in such a manner as to protrude laterally backwardly. Specifically, a front end 9A of the bracket 9 is attached to a rear face of the side portion 8 by a bolt (not shown) or the like. A tension string 11 as another string member is stretched individually between a rear end 9B of each of the bracket 9 and an after-mentioned hub member 10 of the net member 7. For example, a flexible wire or rope may be used as the tension string 11. That is, the net member 7 is pulled backwardly by thus pulling the hub member 10 backwardly by the tension strings 11.

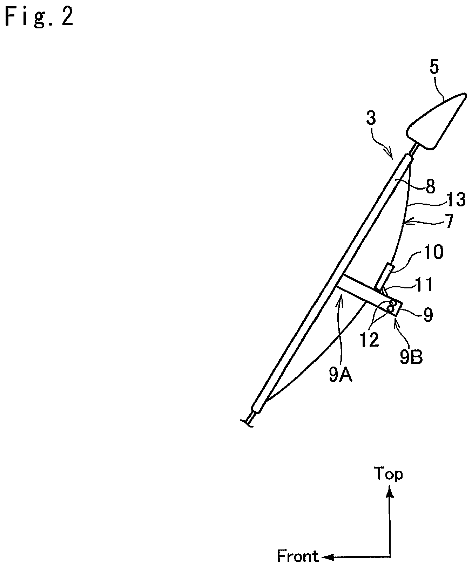

The hub member 10 has a plurality of through holes 18 for letting through the tension strings 11. Specifically, one end of the tension string 11 is attached to an upper fixing portion 12 of the rear end 9B of the bracket 9 by an appropriate stopper device such as a hook, brace etc. An intermediate portion of the tension string 11 is threaded through the through holes 18 of the hub member 10, and the other end of the tension string 11 is attached to a lower fixing portion 12 of the rear end 9B of the bracket 9 by the stopper device. A cross-section of the vehicle seat 1 is partially shown in Fig. 2. As illustrated in Fig. 2, the cross-section of the net member 7 is curved backwardly along a back of the upper body of the occupant. When the hub member 10 is displaced by a load applied from the upper body of the occupant, the hub member 10 is returned flexibly to a width center of the frame 6 between the brackets 9 by a tension of the tension strings 11.

The net member 7 is contoured to hold an upper body of the occupant in such a manner as to allow the shoulder blade to move smoothly while restricting movement of the spine situated between shoulders. To this end, in the net member 7, the hub member 10 is situated behind a spine of the occupant at width center of the frame 6 slightly above the intermediate level of the frame 6.

The hub member 10 comprises a pair of disc members 14 and 16 connected through a plurality of pins 15, and a plurality of strings 13 are drawn radially between the hub member 10 and the frame 6. In some embodiments, the strings 13 include at least one endless (i.e., annular or ring) strings, and in the embodiment shown in Fig. 1, total eight annular strings 13 are arranged radially around the hub member 10. Specifically, a first wrapped portion 13B of each of the strings 13 is connected or attached to the hub member 10, and a second wrapped portion 13C is connected or attached to the frame 6 so that a pair of straight portions 13A of the string 13 is drawn radially between the frame 6 and the hub member 10. As the tension string 11, a flexible wire or rope may also be used as the string 13.

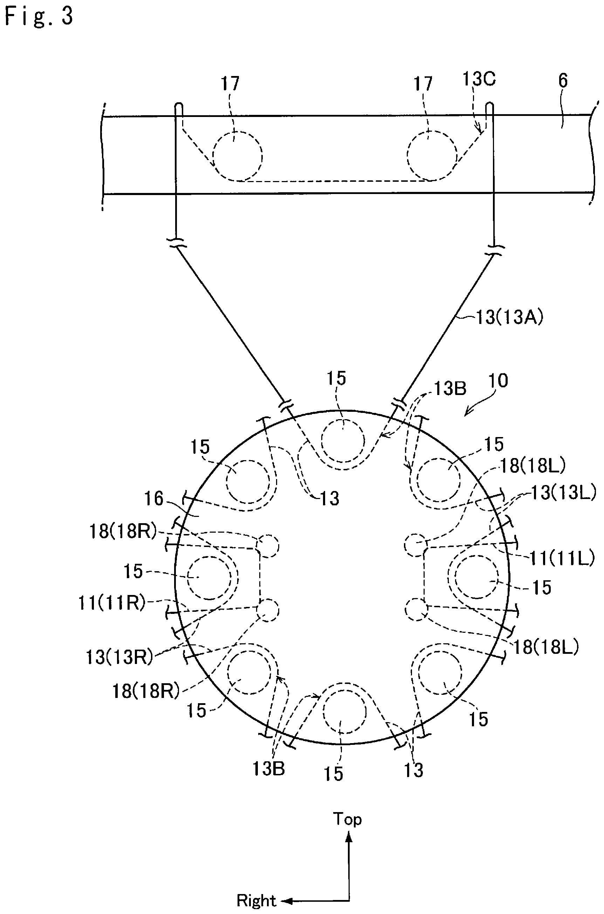

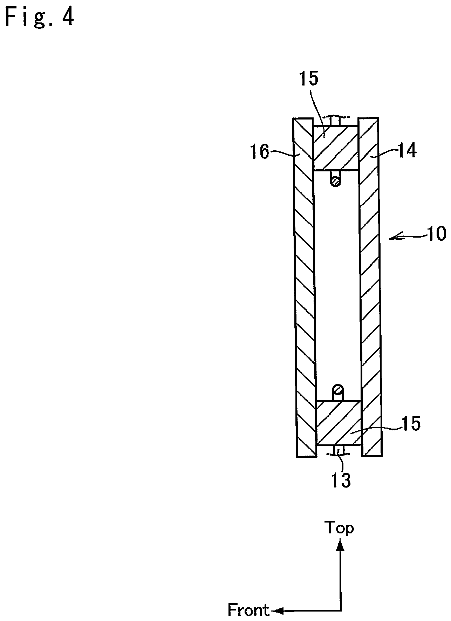

Fig. 3 shows a connection between the first wrapped portion 13B of the string 13 and the hub member 10 and a connection between the second wrapped portion 13C of the string 13 and the frame 6, and Fig. 4 shows a cross-section of the hub member 10. As described, the hub member 10 comprises the first disc member 14, a plurality of the pins 15 as installation members erected on the first disc member 14 in a circular manner at regular intervals, and the second disc member 16 as a cover member having a substantially same diameter as the first disc member 14. The first disc member 14 is situated in a rear side of the vehicle in such a manner that the pins 15 protrude frontward, and the second disc member 16 is attached to the leading ends of the pins 15. The pin 15 may be shaped not only into a column shape but also into a cylindrical shape. That is, the pins 15 are covered by the second disc member 16. The first wrapped portion 13B of each of the strings 13 is wrapped around the pin 15 but without being fixed to the pin 15 and the second wrapped portion 13C of the string 13 is attached to the frame 6 so that the straight portions 13A of the strings 13 are drawn radially between the frame 6 and the hub member 10.

As illustrated in Fig. 3, specifically, a plurality of protrusions 17 are formed on a rear face of the frame 6, and the second wrapped portion 13C of the string 13 is looped around a radially outer portion of the frame 6 to be wrapped around radially inner portions of the protrusions 17. For example, each of the protrusions 17 may be formed individually into a pin protruding backwardly. In this case, a plurality of pairs of protrusions 17 are erected on the rear face of the frame 6 while keeping a predetermined clearance therebetween, and the second wrapped portion 13C of the string 13 is wrapped around radially inner portions of one of the pairs of the protrusions 17. Instead, each of the protrusions 17 may also be formed individually into an oval protrusion having a predetermined length along the frame 6. In this case, the second wrapped portion 13C of the string 13 is wrapped around radially inner portion of one of the oval protrusions 17. Alternatively, a U-shaped or V-shaped grooves may also be formed on the rear face of the frame 6. In this case, the second wrapped portion 13C of the string 13 is threaded through the groove, and the groove is closed by a lid or the like.

In addition, a plurality of through holes 18 are formed in the first disc member 14 in such a manner as to penetrate through the first disc member 14 in the thickness direction. Specifically, a pair of right through holes 18R aligned vertically is formed on the right side of the center of the first disc member 14, and a pair of left through holes 18L aligned vertically is formed on the left side of the center of the first disc member 14 at same levels as the right through holes 18R. Positions of the through holes 18 may be adjusted arbitrarily according to need. Specifically, the intermediate portion of the tension string 11R is threaded through the pair of right through holes 18R of the first disc member 14, and the intermediate portion of the tension string 11L is threaded through the pair of left through holes 18L of the first disc member 14. According to the first embodiment, therefore, stress concentration of the tension string 11 in the through holes 18R and 18L may be diminished in comparison with that of a case in which the tension string 11 is threaded through only one through hole. For this reason, breakage of the tension strings 11 may be prevented in the hub member 10. As described, one end of the tension string 11R is attached to the upper fixing portion 12 of the rear end 9B of one of the brackets 9 by the stopper device, and the other end of the tension string 11R is attached to the lower fixing portion 12 of the rear end 9B of one of the brackets 9 by the stopper device. Likewise, one end of the tension string 11L is attached to the upper fixing portion 12 of the rear end 9B of the other bracket 9 by the stopper device, and the other end of the tension string 11R is attached to the lower fixing portion 12 of the rear end 9B of the other bracket 9 by the stopper device. Consequently, the hub member 10 is pulled downwardly backward toward the right side by the tension string 11R, and pulled downwardly backward toward the left side by the tension string 11L.

Thus, the annular strings 13 are individually wrapped or wound around the pins 15 of the hub member 10 to connect the hub member 10 to the frame 6. According to the first embodiment, therefore, detachment of the strings 13 from the hub member 10 can be prevented even if the strings 13 are subjected to a significant load from the upper body of the occupant or resultant stress to expand the strings 13. In addition, since the pins 15 of the hub member 10 are individually shaped into a column shape or cylindrical shape and the strings 13 are merely wrapped or wound around the pins 15 without being fixed, breakage of the strings 13 may be prevented in the hub member 10. For this reason, the strings 13 may be drawn between the frame 6 and the hub member 10 easily, and durability of the vehicle seat 1 may be improved. Further, property of the vehicle seat 1 such as hardness and stiffness of the net member 7 may be adjusted by changing material of the string members. Specifically, hardness or stiffness of the net member 7 may be increased by using the string material having higher tensile strength as the string 13 to reduce deformation of the string 13. By contrast, hardness or stiffness of the net member 7 may be reduced by using the string material having lower tensile strength as the string 13 to increase deformation of the string 13. For example, the occupant is allowed to move his/her shoulders easily by using the string material having lower tensile strength within an area for holding the shoulders. By contrast, lumbosacral area of the occupant may be held tightly by using the string material having higher tensile strength within an area for holding the lumbosacral area.

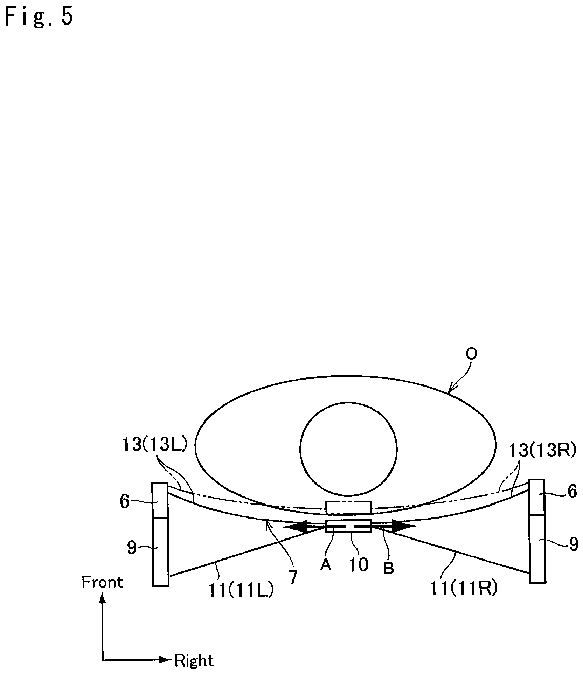

Fig. 5 schematically shows the load applied to the hub member 10. As shown in Fig. 5, the hub member 10 is pulled downwardly backward toward the right side by the tension string 11R, and pulled downwardly backward toward the left side by the tension string 11L. In the vehicle seat 1, therefore, the net member 7 is pulled backwardly from a position depicted by the two-dotted-dashed line by tensile loads of the tension strings 11 so that the net member 7 is taut within the frame 6.

When the occupant O leans against the seatback 3, the net member 7 is subjected to a load applied from the occupant's back. Consequently, the strings 13 are expanded or stretched and the net member 7 is bowed backwardly. In this situation, tensile resistance of the strings 13 is increased with an increase in the load applied from the occupant's back so that the upper body of the occupant O is held tightly but flexibly by the net member 7.

During turning of the vehicle, the occupant O is subjected to a lateral load. When such lateral load is applied to the hub member 10 through the upper body of the occupant O in the direction represented by the arrow A (i.e., toward the left side in Fig. 5), the right tension string 11R and the right string 13R are stretched by the hub member 10. In this situation, tensions of the tension string 11R and the right string 13R serve as a resistance counteracting the lateral load in the direction represents by the arrow B. In the vehicle seat 1, therefore, the upper body of the occupant O may be held tightly but flexibly by the net member 7. In this situation, by contrast, the left tension string 11L and the left string 13L are not stretched so that the hub member 10 is returned to the original position. Likewise, if the hub member 10 is subjected to the lateral load the direction represented by the arrow B (i.e., toward the right side in Fig. 5), the hub member 10 may be returned to the original position by the same principle.

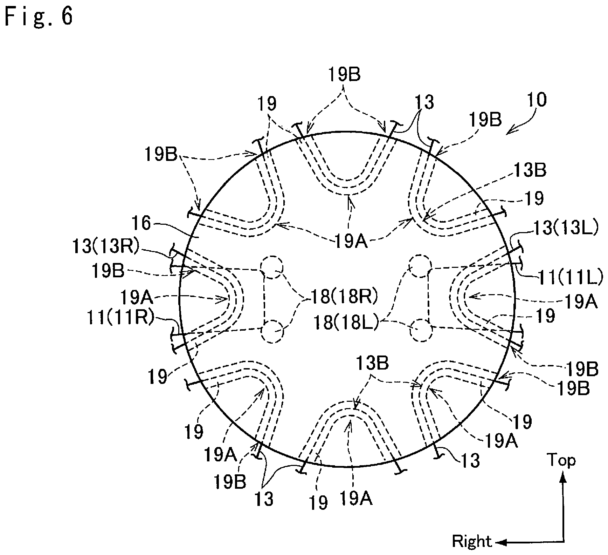

Turning to Fig. 6, there is shown the second embodiment of the vehicle seat according to the present disclosure. According to the second embodiment, grooves 19 are formed on the face of the first disc member 14 opposed to the second disc member 16 instead of the pins 15. Specifically, each of the grooves 19 is formed into a U-shaped groove in which a curved portion 19A is situated on a radially inner side of the first disc member 14, and in which each end 19B is opened at an outer circumferential edge of the first disc member 14. The first wrapped portion 13B of each of the strings 13 is individually fitted into or threaded through the groove 19. The grooves 19 individually holding the strings 13 are closed by the second disc member 16. As the first embodiment shown in Fig. 3, the second wrapped portion 13C of each of the string 13 is also looped around the frame 6 to be wrapped around radially inner portions of the protrusion(s) 17 so that the straight portions 13A of each of the strings 13 are drawn radially between the frame 6 and the hub member 10. The remaining structures are similar to those of the vehicle seat according to the first embodiment, and detailed explanations for the common elements will be omitted by allotting common reference numerals thereto.

Thus, the annular strings 13 are partially held in the U-shaped grooves 19 to connect the hub member 10 to the frame 6. According to the second embodiment, therefore, detachment of the strings 13 from the hub member 10 can be prevented even if the strings 13 are subjected to a load from the upper body of the occupant or resultant stress to expand the strings 13. In addition, since the grooves 19 of the hub member 10 are individually shaped into a U-shaped groove and the strings 13 are merely fitted into or threaded through the groove 19 without being fixed, breakage of the strings 13 may be prevented in the hub member 10. For this reason, the strings 13 may also be drawn between the frame 6 and the hub member 10 easily, and durability of the vehicle seat 1 may also be improved. Further, property of the vehicle seat 1 such as hardness and stiffness of the net member 7 may also be adjusted by changing material of the string members.

As explained in the first embodiment, the occupant is subjected to a lateral load during turning of the vehicle. For example, when such lateral load is applied to the hub member 10 leftward through the upper body of the occupant, the right tension string 11R and the right string 13R are stretched by the hub member 10. In this situation, tensions of the tension string 11R and the right string 13R acts as a resistance against the lateral load in the counter direction. In the vehicle seat 1, therefore, the upper body of the occupant O may be held tightly but flexibly by the net member 7. In this situation, by contrast, the left tension string 11L and the left string 13L are not stretched so that the hub member 10 is returned to the original position. For this reason, the upper body of the occupant may be held tightly by the net member 7 but the occupant is still allowed to move his/her shoulder easily. Thus, the advantages of the vehicle seat 1 according to the first embodiment may also be achieved by the vehicle seat 1 according to the second embodiment.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the scope of the claims, and that they may make various changes, substitutions, and alterations herein without departing from the scope of the claims.

For example, the hub member 10 may also be pulled backwardly by additional annular strings 13 connecting the hub member 10 and the brackets 9 instead of the tension strings 11. In this case, it is not necessary to form the through holes 18 on the first disc member 14 of the hub member 10, and hub member 10 is also allowed to return to the original position even if it is subjected to the lateral load. In addition, the brackets 9 may also be formed integrally with the side portions 8 of the frame 6 in such a manner as to protrude backwardly. Further, the net member 7 may be covered by a resin cover manufactured by an injection molding process.

## Claims

1. A vehicle seat (1), comprising:
a seatback frame (6);
a hub member (10) including a plurality of installation members (15, 19);
a plurality of strings (13) drawn radially between the hub member (10) and the seatback frame (6) to form a seatback (3) supporting an upper body of an occupant (O) sitting on the vehicle seat (1);
the strings (13) including an annular string (13);
the annular string (13) including a first portion (13B) wrapped around or threaded through the installation member (15), a second portion (13C) attached to the seatback frame (6), and a pair of straight portions (13A) extending between the first portion (13B) and the second portion (13C);
**characterized in that** the hub member (10) is situated at a width center of the frame (6) and slightly above an intermediate level of the frame (6), so as to be situated behind a spine of the occupant.

2. The vehicle seat (1) as claimed in claim 1,
wherein the seatback frame (6) comprises a pair of side portions (8) extending vertically, and a pair of protrusions (9) individually attached to the side portions (8) in such a manner as to protrude backwardly, and
wherein the vehicle seat (1) further comprises other string members (11), each of the other string members (11) being drawn between the hub member (10) and a respective one of the protrusions (9) to establish a resistance counteracting a load applied to the hub member (10), thereby pulling the hub member (10) backwardly.

3. The vehicle seat as claimed in claim 1,
wherein the seatback frame (6) comprises a pair of side portions (8) extending vertically, and a pair of protrusions (9) individually attached to the side portions (8) in such a manner as to protrude backwardly, and
wherein the annular strings (13) include additional annular strings (13), each of the additional annular strings (13) being drawn laterally between the hub member (10) and a respective one of the protrusions (9) to establish a resistance counteracting a load applied to the hub member (10), thereby pulling the hub member (10) backwardly.

4. The vehicle seat as claimed in claim 2, wherein one end of the tension string (11) is attached to a rear end (9B) of the protrusion (9), an intermediate portion of the tension string (11) is attached to the hub member (10), and the other end of the tension string (11) is attached to the rear end (9B) of the protrusion (9).

5. A vehicle seat (1) as claimed in any of claims 1 to 4, wherein the seatback frame (6) includes a lower lateral portion to which the second portion (13C) of the annular string (13) is attached.

6. The vehicle seat (1) according to any one of the preceding claims, wherein the seatback frame (6) includes an upper lateral portion to which the second portion (13C) of the annular string (13) is attached.

## Patentansprüche

1. Fahrzeugsitz (1), umfassend:
einen Rücklehnenrahmen (6),
ein Nabenelement (10), das mehrere Installationselemente (15, 19) beinhaltet,
mehrere Schnüre (13), die radial zwischen dem Nabenelement (10) und dem Rücklehnenrahmen (6) gespannt sind, um eine Rücklehne (3) auszubilden, die einen Oberkörper eines Insassen (O) stützt, der auf dem Fahrzeugsitz (1) sitzt,
wobei die Schnüre (13) eine ringförmige Schnur (13) beinhalten,
wobei die ringförmige Schnur (13) einen ersten Abschnitt (13B), der um das Installationselement (15) gewickelt oder durch dieses gefädelt ist, einen zweiten Abschnitt (13C), der an dem Rücklehnenrahmen (6) angebracht ist, und ein Paar gerader Abschnitte (13A) beinhaltet, die sich zwischen dem ersten Abschnitt (13B) und dem zweiten Abschnitt (13C) erstrecken,
**dadurch gekennzeichnet, dass** sich das Nabenelement (10) an einer Breitenmitte des Rahmens (6) und etwas über einer Zwischenebene des Rahmens (6) befindet, um hinter der Wirbelsäule des Insassen gelegen zu sein.

2. Fahrzeugsitz (1) nach Anspruch 1,
wobei der Rücklehnenrahmen (6) ein Paar Seitenabschnitte (8), die sich vertikal erstrecken, und ein Paar Vorsprünge (9) umfasst, die einzeln an den Seitenabschnitten (8) auf solche Weise angebracht sind, dass sie nach hinten vorstehen, und
wobei der Fahrzeugsitz (1) ferner weitere Schnurelemente (11) umfasst, wobei jedes der weiteren Schnurelemente (11) zwischen dem Nabenelement (10) und einem jeweiligen der Vorsprünge (9) gespannt ist, um einen Widerstand herzustellen, der einer Last entgegenwirkt, die auf das Nabenelement (10) ausgeübt wird, wodurch das Nabenelement (10) nach hinten gezogen wird.

3. Fahrzeugsitz nach Anspruch 1,
wobei der Rücklehnenrahmen (6) ein Paar Seitenabschnitte (8), die sich vertikal erstrecken, und ein Paar Vorsprünge (9) umfasst, die einzeln an den Seitenabschnitten (8) auf solche Weise angebracht sind, dass sie nach hinten vorstehen, und
wobei die ringförmigen Schnüre (13) zusätzliche ringförmige Schnüre (13) beinhalten, wobei jede der zusätzlichen ringförmigen Schnüre (13) lateral zwischen dem Nabenelement (10) und einem jeweiligen der Vorsprünge (9) gespannt ist, um einen Widerstand herzustellen, der einer Last entgegenwirkt, die auf das Nabenelement (10) ausgeübt wird, wodurch das Nabenelement (10) nach hinten gezogen wird.

4. Fahrzeugsitz nach Anspruch 2, wobei ein Ende der Spannschnur (11) an einem hinteren Ende (9B) des Vorsprungs (9) angebracht ist, ein Zwischenabschnitt der Spannschnur (11) an dem Nabenelement (10) angebracht ist und das andere Ende der Spannschnur (11) an dem hinteren Ende (9B) des Vorsprungs (9) angebracht ist.

5. Fahrzeugsitz (1) nach einem der Ansprüche 1 bis 4, wobei der Rücklehnenrahmen (6) einen unteren Seitenabschnitt beinhaltet, an dem der zweite Abschnitt (13C) der ringförmigen Schnur (13) angebracht ist.

6. Fahrzeugsitz (1) nach einem der vorhergehenden Ansprüche, wobei der Rücklehnenrahmen (6) einen oberen Seitenabschnitt beinhaltet, an dem der zweite Abschnitt (13C) der ringförmigen Schnur (13) angebracht ist.

## Revendications

1. Siège de véhicule (1), comprenant :
un cadre de dossier de siège (6) ;
un élément de moyeu (10) comprenant une pluralité d'éléments d'installation (15, 19) ;
une pluralité de cordons (13) tirés radialement entre l'élément de moyeu (10) et le cadre de dossier de siège (6) pour former un dossier de siège (3) supportant un corps supérieur d'un occupant (O) assis sur le siège de véhicule (1) ;
les cordons (13) comprenant un cordon annulaire (13) ;
le cordon annulaire (13) comprenant une première partie (13B) enroulée autour de ou enfilée à travers l'élément d'installation (15), une deuxième partie (13C) fixée sur le cadre de dossier de siège (6), et une paire de parties droites (13A) s'étendant entre la première partie (13B) et la deuxième partie (13C) ;
**caractérisé en ce que** l'élément de moyeu (10) se trouve au niveau d'un centre de largeur du cadre (6) et légèrement au-dessus d'un niveau intermédiaire du cadre (6), de façon à être situé derrière une colonne vertébrale de l'occupant.

2. Siège de véhicule (1) selon la revendication 1,
dans lequel le cadre de dossier de siège (6) comporte une paire de parties latérales (8) s'étendant verticalement, et une paire de saillies (9) fixées individuellement sur les parties latérales (8) de manière à dépasser vers l'arrière, et
dans lequel le siège de véhicule (1) comprend en outre d'autres éléments de cordons (11), chacun des autres éléments de cordons (11) étant tiré entre l'élément de moyeu (10) et une saillie respective des saillies (9) pour établir une résistance qui contrecarre une charge appliquée sur l'élément de moyeu (10), en tirant ainsi l'élément de moyeu (10) vers l'arrière.

3. Siège de véhicule selon la revendication 1,
dans lequel le cadre de dossier de siège (6) comporte une paire de parties latérales (8) s'étendant verticalement, et une paire de saillies (9) fixées individuellement sur les parties latérales (8) de manière à dépasser vers l'arrière, et
dans lequel les cordons annulaires (13) comprennent des cordons annulaires supplémentaires (13), chacun des cordons annulaires supplémentaires (13) étant tiré latéralement entre l'élément de moyeu (10) et une saillie respective des saillies (9) pour établir une résistance qui contrecarre une charge appliquée sur l'élément de moyeu (10), en tirant ainsi l'élément de moyeu (10) vers l'arrière.

4. Siège de véhicule selon la revendication 2, dans lequel une extrémité du cordon de tension (11) est fixée sur une extrémité arrière (9B) de la saillie (9), une partie intermédiaire du cordon de tension (11) est fixée sur l'élément de moyeu (10), et l'autre extrémité du cordon de tension (11) est fixée sur l'extrémité arrière (9B) de la saillie (9).

5. Siège de véhicule (1) selon l'une quelconque des revendications 1 à 4, dans lequel le cadre de dossier de siège (6) comprend une partie latérale inférieure sur laquelle la deuxième partie (13C) du cordon annulaire (13) est fixée.

6. Siège de véhicule (1) selon l'une quelconque des revendications précédentes, dans lequel le cadre de dossier de siège (6) comprend une partie latérale supérieure sur laquelle la deuxième partie (13C) du cordon annulaire (13) est fixée.
